# EUROPEAN PATENT APPLICATION

(11) **EP 4 040 885 A1**
(43) Date of publication of application: **10.08.2022**
(21) Application number: 19947819.9
(22) Date of filing: 04.10.2019
(51) Int. Cl.: H04W 72/04

(54) **TERMINAL AND COMMUNICATION METHOD**

(71) Applicant: NTT DOCOMO, INC., Chiyoda-Ku Tokyo 100-6150 (JP)
(72) Inventor: KUMAGAI, Shinya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2019/039393
(87) International publication number: WO 2021/065011

(57) **Abstract**

A terminal includes a receiving unit that receives higher layer signaling and downlink control information; a control unit that identifies a plurality of uplink shared channels allocated in a first slot at a start, from among scheduled consecutive uplink shared channels, based on the higher layer signaling and the downlink control information; and a transmitting unit that transmits data through the identified plurality of uplink shared channels.

## Description

### TECHNICAL FIELD

The present invention relates to a terminal and a communication method in a radio communication system.

### BACKGROUND ART

In New Radio (NR) (which is also referred to as "5G") that is a successor system to Long Term Evolution (LTE), technology has been studied that meets the requirements, such as a requirement on large capacity system, a requirement on a high data transmission rate, a requirement on low latency, a requirement on simultaneous connection of multiple terminals, a requirement on low cost, and a requirement on power saving.

For an existing LTE system, in order to extend a frequency band, utilization of a frequency band (which may also be referred to as an unlicensed band, an unlicensed carrier, or an unlicensed CC) that differs from a frequency band licensed to a telecommunication operator (licensed band) is supported. As an unlicensed band, for example, the 2.4 GHz band or the 5GHz band, the 6GHz band, and the like are assumed on which Wi-Fi (registered trademark) or Bluetooth (registered trademark) can be used.

Specifically, for Rel-13, a carrier aggregation (Carrier Aggregation: CA) is supported which aggregates a carrier (CC) of a licensed band and a carrier (CC) of an unlicensed band. A communication that is performed using a licensed band and an unlicensed band, such as that of described above, is called License-Assisted Access (LAA).

In a radio communication system in which a communication is performed using a license band and an unlicensed band, prior to a data transmission on the unlicensed band, a base station device (downlink) and a user terminal (uplink) perform channel sensing (carrier sensing) to confirm presence or absence of a transmission by another device (e.g., a base station device, a user terminal, or a Wi-Fi device). After confirming, as a result of the sensing, that there is no transmission by another device, a transmission occasion can be obtained and a transmission can be performed. This operation is referred to as Listen Before Talk (LBT). In NR, a system that supports an unlicensed band is referred to as an NR-U system.

### Related Art Document

### [Non-Patent Document]

Non-Patent Document 1: 3GPP TS 38.331 V15.6.0 (2019-06)
Non-Patent Document 2: 3GPP TS 38.212 V15.6.0 (2019-06)
Non-Patent Document 3: 3GPP TS 38.213 V15.6.0 (2019-06)
Non-Patent Document 4: 3GPP TS 38.214 V15.6.0 (2019-06)

### SUMMARY OF THE INVENTION

### [PROBLEM TO BE SOLVED BY THE INVENTION]

In NR-U, a multi-TTI grant for assigning multiple PUSCHs to a terminal has been studied. However, details of signaling for assigning multiple PUSCHs in one slot have not been specified.

The present invention has been made in view of the above-described point, and an object is to assign multiple uplink shared channels in a radio communication system.

### [MEANS FOR SOLVING THE PROBLEM]

According to the disclosed technology, there is provided a terminal including a receiving unit that receives higher layer signaling and downlink control information; a control unit that identifies a plurality of uplink shared channels allocated in a first slot at a start, from among scheduled consecutive uplink shared channels, based on the higher layer signaling and the downlink control information; and a transmitting unit that transmits data through the identified plurality of uplink shared channels.

### [ADVANTAGE OF THE INVENTION]

According to the disclosed technology, a technique for assigning a plurality of uplink shared channels in a radio communication system can be provided.

### BRIEF DESCRIPTION OF DRAWINGS

Fig. 1 is a diagram illustrating an example of a configuration of a radio communication system in an embodiment of the present invention.
Fig. 2 is a diagram for illustrating a radio communication system in an embodiment of the present invention.
Fig. 3 is a diagram for illustrating a Multi-TTI grant.
Fig. 4 is a sequence diagram for illustrating an example of a signalling in an embodiment of the present invention.
Fig. 5 is a diagram illustrating an example (1) of an arrangement of PUSCHs according to an embodiment of the present invention.
Fig. 6 is a diagram illustrating an example (2) of the arrangement of PUSCHs according to an embodiment of the present invention.
Fig. 7 is a diagram illustrating an example (3) of the arrangement of PUSCHs according to an embodiment of the present invention.
Fig. 8 is a diagram illustrating an example (4) of the arrangement of PUSCHs according to an embodiment of the present invention.
Fig. 9 is a diagram illustrating an example (5) of the arrangement of PUSCHs according to an embodiment of the present invention.
Fig. 10 is a diagram illustrating an example of a functional configuration of a base station 10 according to an embodiment of the present invention.
Fig. 11 is a diagram illustrating an example of a functional configuration of a terminal 20 according to an embodiment of the present invention.
Fig. 12 is a diagram illustrating a hardware configuration of the base station 10 or the terminal 20 according to an embodiment of the present invention.

### [EMBODIMENTS OF THE INVENTION]

In the following, embodiments of the present invention are described by referring to the drawings. Note that the embodiments described below are an example, and embodiments to which the present invention is applied are not limited to the following embodiments.

In an operation of a radio communication system of an embodiment of the present invention, existing technology is appropriately used. Here, the existing technology is, for example, existing LTE but not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as Synchronization signal(SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, an Frequency Division Duplex (FDD) method, or any other method (e.g., Flexible Duplex, etc.).

In the embodiments of the present invention, "configuring" a radio parameter, or the like, may be "pre-configuring" a predetermined value, or configuring a radio parameter transmitted from a base station 10 or a terminal 20.

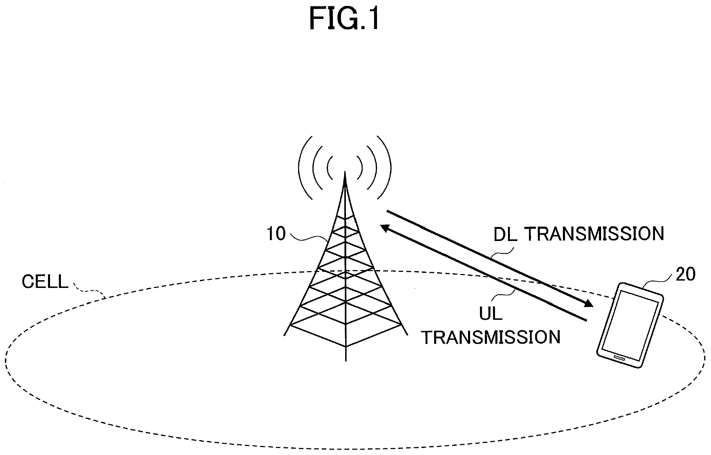

Fig. 1 is a diagram illustrating an example of a configuration of a radio communication system according to an embodiment of the present invention. As illustrated in Fig. 1, the radio communication system according to the embodiment of the present invention includes a base station 10 and a terminal 20. In Fig. 1, one base station 10 and one terminal 20 are illustrated. However, this is an example, and there may be a plurality of base stations 10 and a plurality of terminals 20.

The base station 10 provides one or more cells, and the base station 10 is a communication device for performing radio communication with the terminal 20. A physical resource of a radio signal may be defined in a time domain and a frequency domain, the time domain may be defined in terms of a number of OFDM (Orthogonal Frequency Division Multiplexing) symbols, and the frequency domain may be defined in terms of a number of subcarriers or a number of resource blocks. The base station 10 transmits a synchronization signal and system information to the terminal 20. The synchronization signal is, for example, NR-PSS and NR-SSS. The system information is transmitted, for example, on a NR-PBCH, and the system information is also referred to as broadcast information. As illustrated in Fig. 1, the base station 10 transmits a control signal or data to the terminal 20 on DL (Downlink), and the base station 10 receives a control signal or data from the terminal 20 on UL (Uplink). Each of the base station 10 and the terminal 20 can transmit and receive signals by performing beamforming. Furthermore, the base station 10 and the terminal 20 can apply MIMO (Multiple Input Multiple Output) based communication to DL or UL. Furthermore, the base station 10 and the terminal 20 may perform communication through a secondary cell (SCell: Secondary Cell) and a primary cell (PCell: Primary Cell) that are configured based on CA (Carrier Aggregation). Furthermore, the terminal 20 may perform communication through a primary cell of the base station 10 and a primary secondary cell (PSCell: Primary Secondary Cell) of another base station 10 that are configured based on DC (Dual Connectivity).

The terminal 20 is a communication device provided with a radio communication function, such as a smartphone, a cellular phone, a tablet, a wearable terminal, a communication module for M2M (Machine-to-Machine), or the like. As illustrated in FIG. 1, the terminal 20 utilizes various communication services provided by a radio communication system by receiving control signals or data in DL from the base station 10 and transmitting control signals or data in UL to the base station 10.

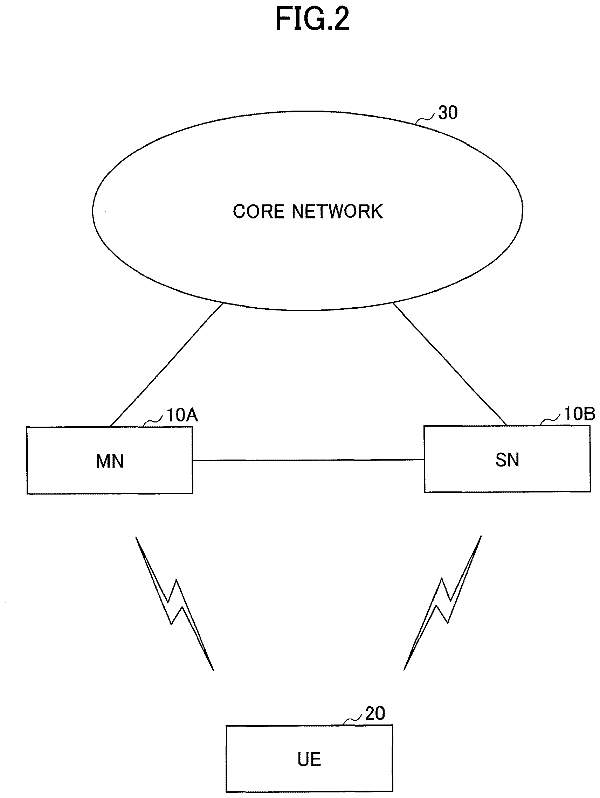

Fig. 2 is a diagram for illustrating a radio communication system according to an embodiment of the present invention. Fig. 2 shows a configuration example of a radio communication system when NR-Dual connectivity (NR-DC) is executed. As illustrated in Fig. 2, a base station 10A serving as a Master Node (MN) and a base station 10B serving as a Secondary Node (SN) are provided. Each of the base station 10A and the base station 10B is connected to a core network 30. The terminal 20 communicates with both of the base station 10A and the base station 10B.

A cell group provided by the base station 10A that is the MN is called a Master Cell Group (MCG), and a cell group provided by the base station 10B that is the SN is called a Secondary Cell Group (SCG). The operations described below may be performed in any of the configurations of Fig. 1 and Fig. 2.

In the radio communication system according to the embodiment, the above-described LBT is executed. The base station 10 or the terminal 20 obtains a Channel Occupancy Time (COT) when a LBT result is idle (when the LBT is successful) and performs a transmission. The base station 10 or the terminal 20 does not perform a transmission when a LBT result is busy (LBT-busy).

The radio communication system according to the embodiment may perform a carrier aggregation (CA) operation using an unlicensed CC and a licensed CC; may perform a dual connectivity (DC) operation using an unlicensed CC and a licensed CC; or may perform a stand-alone (SA) operation using an unlicensed CC alone. CA, DC, or SA may be performed by one or more of an NR system and an LTE system. DC may be performed by two or more of NR, LTE, and another system.

The terminal 20 may assume presence of a signal (e.g., a Reference Signal (RS), such as Demodulation Reference Signal (DMRS)) in a PDCCH or a group common PDCCH (group common (GC)-PDCCH) for detecting a transmit burst from the base station 10.

The base station 10 may transmit, at a start of a base station device triggered COT, a specific PDCCH (PDCCH or GC-PDCCH) including a specific DMRS for indicating to start the COT. One or more of a specific PDCCH and a specific DMRS may be referred to as a COT start indication signal. For example, the base station 10 transmits a COT start indication signal to one or more terminals 20, and the terminal 20 can recognize the COT in response to detecting a specific DMRS.

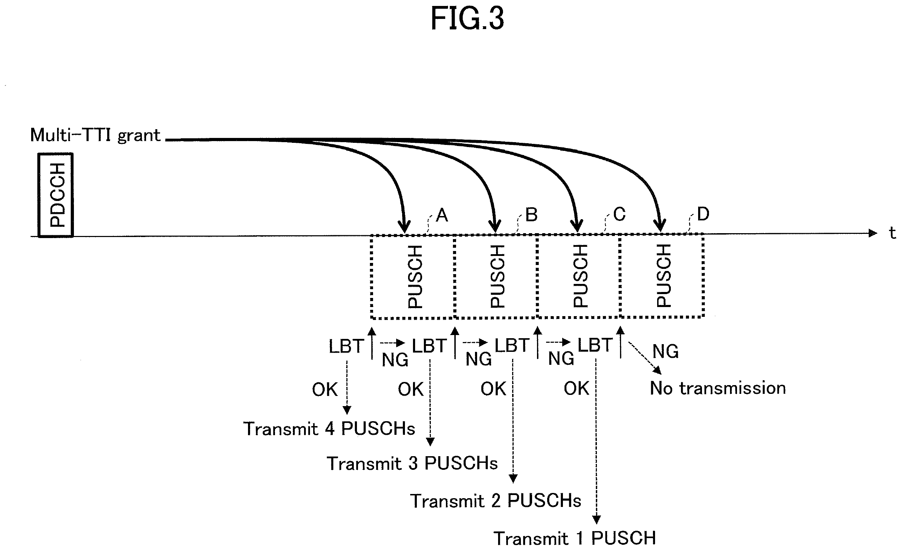

Fig. 3 is a diagram for illustrating a multi-TTI (Transmission Time Interval) grant. For Release 16 NR-U, a multi-TTI grant is assumed to be used such that a plurality of PUSCHs over a plurality of slots or a plurality of mini-slots is scheduled by a single DCI (Downlink Control Information). Note that "scheduling (or to schedule)" may be replaced with "assigning."

By a multi-TTI grant, a plurality of contiguous PUSCHs for transmitting separate Transport Blocks (TBs) is scheduled. One TB is mapped to one slot or one mini-slot, and the one TB is transmitted on one PUSCH. One hybrid automatic repeat request (HARQ) process is assigned to the one PUSCH for transmitting the one TB.

For multiple PUSCHs scheduled by one DCI, New data indicator (NDI) and Redundancy version (RV) are signaled per PUSCH by the one DCI. A HARQ process ID signalled by the DCI is applied to a first PUSCH scheduled. For HARQ process IDs for the subsequent PUSCHs, values obtained by sequentially incrementing the signaled value by one in the order of the PUSCHs are applied.

Fig. 3 is a diagram illustrating an example of an operation of the user terminal 20 receiving a multi-TTI grant. In the example of Fig. 3, the multi-TTI grant schedules PUSCHs for four slots.

The user terminal 20 executes LBT before the slot indicated by A for which the first PUSCH is scheduled, and the terminal 20 transmits data on four consecutive PUSCHs if the LBT is OK. If the first LBT is not OK, LBT is executed before the slot indicated by B for which the PUSCH is scheduled and data is transmitted on three consecutive PUSCHs if the LBT is OK. Subsequently, the same process is executed. If LBT is executed before the slot indicated by D for which the PUSCH is scheduled and the LBT is not OK, no transmission is performed.

For example, in PUSCH scheduling, a single DCI may support a plurality of slots or a plurality of mini-slots including a plurality of consecutive PUSCHs that may include a separated plurality of TBs. For example, DCI for signalling a plurality of PUSCHs may include NDI and RV. For example, code block group (CGB)-based retransmissions may be supported in multiple PUSCH scheduling, and the CGB-based retransmissions may be signalled by a DCI field on a per one PUSCH or multiple PUSCHs to be retransmitted basis, on a per PUSCH basis, or on a per fixed number of PUSCHs basis. For example, the HARQ process ID signalled by DCI may be applied to a first scheduled PUSCH, and the HARQ process ID may be incremented by one on a per subsequent PUSCH basis.

For example, a resource assignment in a time domain for scheduling a PUSCH may be extended. For example, a range of a start symbol position and an end symbol position may be extended, consecutive resource assignments in a time domain may be extended, a plurality of PUSCH may be allocated in a first slot, or a plurality of start symbol positions may be supported in a terminal-initiated COT.

Furthermore, in release 16NR-U, it has been studied how to transmit a notification of multiple PUSCHs by using a configured grant (CG: Configured-grant).

Here, as for a resource assignment in a time domain in a case where a notification of multiple PUSCHs is to be transmitted, details of a notification method are not specified in a case where multiple PUSCHs are allowed to be allocated to a first slot. Furthermore, as for a resource assignment in a time domain in a case where a notification of multiple PUSCHs is to be transmitted, details of a notification method are not specified in a case where multiple start symbol positions are supported in a terminal-initiated COT. Furthermore, it has not been specified as to whether the existing DCI format is to be extended or a new format is required in a case where scheduling of multiple PUSCHs is supported.

Furthermore, signaling related to details of the number of slots in which multiple PUSCHs are to be allocated have not been specified. Furthermore, a notification of an allocation of multiple PUSCHs within one slot has not been specified.

Thus, in the embodiments of the present invention, an object is to ensure sufficient transmission occasions or LBT occasions while maintaining the size of the DCI as much as possible in multi-TTI grant in NR-U. Furthermore, in the embodiments of the present invention, an object is to ensure sufficient transmission occasions or LBT occasions while maintaining the size of configured-grant type 2 DCI for transmitting a notification of a time domain resource assignment as much as possible in configured-grant in NR-U.

For example, the base station 10 instructs the terminal 20 to transmit a plurality of consecutive PUSCHs. Furthermore, the base station 10 configures the terminal 20 with transmission occasions for the plurality of consecutive PUSCHs. In a first UL slot that is instructed to be transmitted or in which transmission occasions are configured, the terminal 20 assumes that "S" indicated by a Start and length indicator (SLIV) is the position of the start symbol of the first PUSCH, and that "L" is the number of PUSCH symbols within the slot. Namely, "L" represents the length of the PUSCH. In a slot other than the first UL slot that is instructed to be transmitted or in which the transmission occasions are configured, the terminal 20 assumes a fixed number of PUSCH symbols.

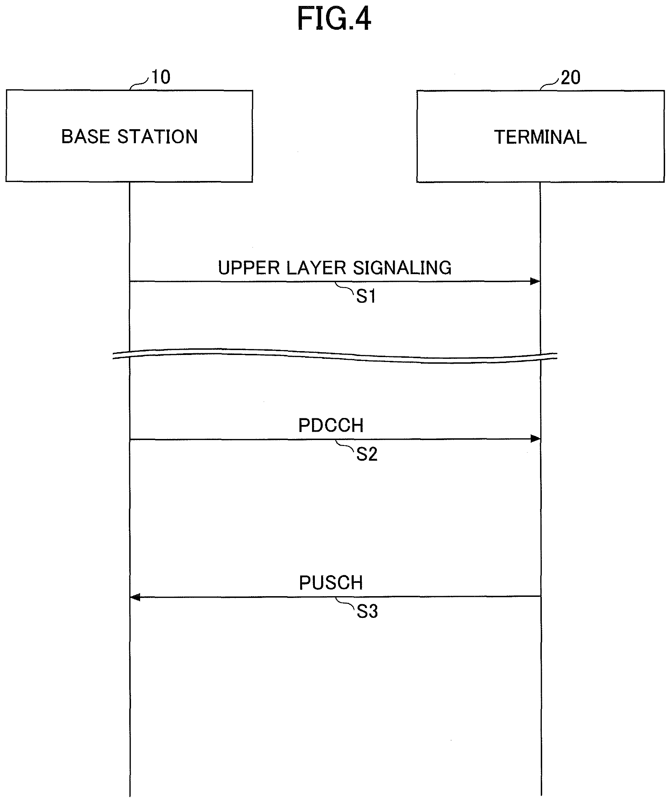

Fig. 4 is a sequence diagram for illustrating an example of signaling in an embodiment of the present invention. The base station 10 instructs the terminal 20 to transmit a plurality of consecutive PUSCHs, or the base station 10 configures the terminal 20 with transmission occasions.

In step S1, the base station 10 transmits, to the terminal 20, a notification of configuration information for configured-grant type 1 or type 2 through higher layer signaling. For example, for the configured-grant type 1, the configuration information includes the number of PUSCHs capable of being transmitted or the number of UL slots capable of transmitting PUSCHs. For example, for the configured-grant type 2, the configuration information includes the number of PUSCHs scheduled by DCI, the number of PUSCHs capable of being transmitted, or the number of UL slots capable of transmitting PUSCHs.

In step S2, the base station 10 transmits, to the terminal 20, DCI including multi-TTI grant or configured-grant type 2 through a PDCCH. Subsequently, the terminal 20 transmits data to the base station 10 through one or more PUSCHs determined based on the received DCI (S3).

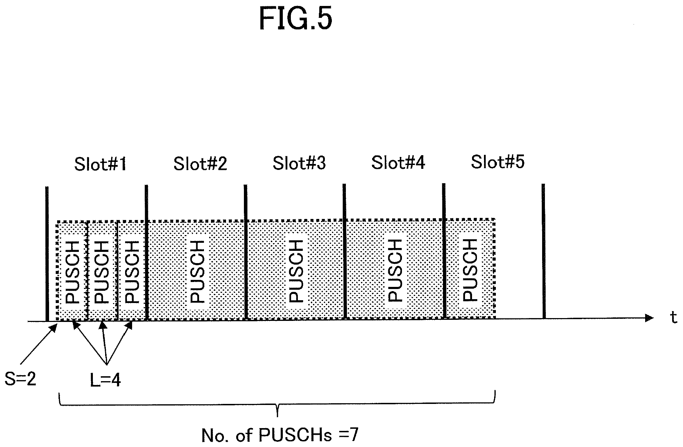

Fig. 5 is a diagram illustrating an example (1) of an arrangement of PUSCHs in an embodiment of the present invention. In a first UL slot that is instructed to be transmitted or in which transmission occasions are configured, the terminal 20 may assume that S indicated by a SLIV is the position of the start symbol of the first PUSCH, and that L is the number of PUSCH symbols within the slot. For the configured-grant type 1, the SLIV may be transmitted by higher layer signaling. For the multi-TTI grant or the configured-grant type 2, the SLIV may be transmitted by DCI.

Fig. 5 illustrates an example of an arrangement in which S = 2, L = 4, and the number of PUSCHs = 7. In the first slot #1, three PUSCHs, where the number of symbols in each PUSCH is 4, are allocated from the start symbol position 2. Note that a symbol position within one slot is defined to be one of 0 to 13. In each slot of the slot #2, the slot #3, the slot #4, and the slot #5, one PUSCH is allocated.

By a combination of (S, L), only a combination for which PUSCHs continues until the last symbol of the first slot may be specified. Namely, only the (S, L) satisfying S + L * n = 14 may be specified. Here, n is the number of PUSCHs within the slot. For example, in Fig. 5, since (S, L) = (2, 4) and n = 3, S + L * n = 2 + 4 * 3 = 14.

Note that, for example, the number of PUSCHs allocated in the first slot may be 1. Namely, a configuration may be made, such as n = 1 and (S, L) = (2, 12), or n = 1 and (S, L) = (3, 11).

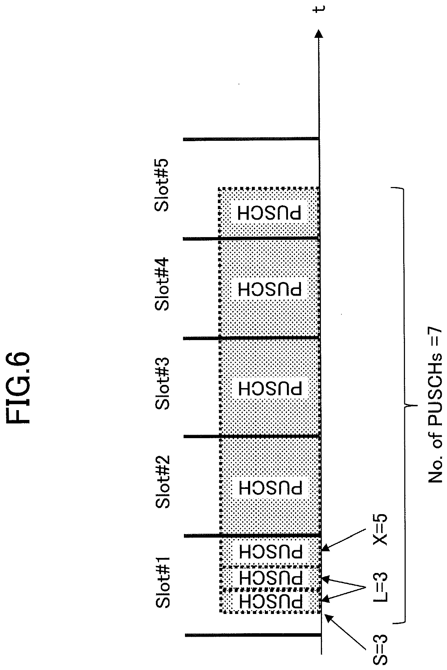

Fig. 6 is a diagram illustrating an example (2) of an arrangement of PUSCHs in an embodiment of the present invention. In a case where the combination (S, L) is such that PUSCHs does not continue until the last symbol in the first slot, the maximum value of n satisfying S + L * n < 14 may be the number of PUSCHs within the slot, and the number of symbols X in the last PUSCH within the slot may be set so that S + L * (n - 1) + X = 14.

For example, in Fig. 6, (S, L) = (3, 3). If n = 3, S + L * n = 3 + 3 * 3 = 12. If n = 4, S + L * n = 3 + 3 * 4 = 15. Accordingly, the maximum value of n satisfying S + L * n < 14 is 3. Furthermore, since S + L * (n - 1) + X = 3 + 3 * (3 - 1) + X = 9 + X = 14, X is equal to 5.

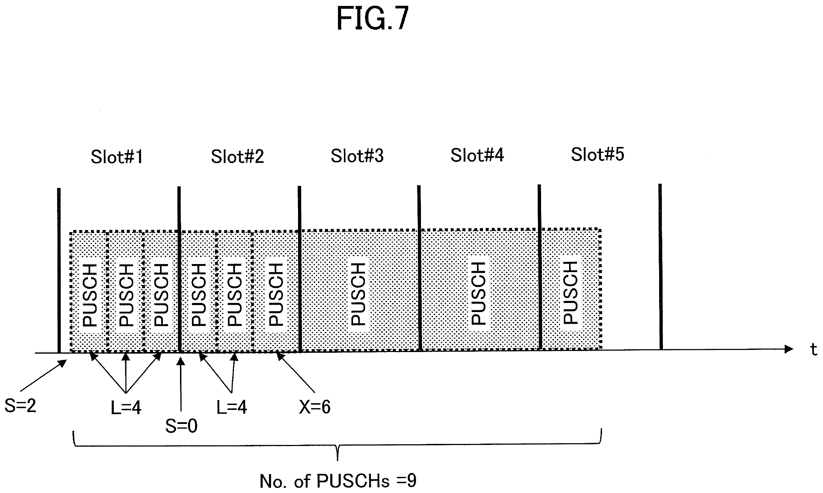

Fig. 7 is a diagram illustrating an example (3) of an arrangement of PUSCHs in an embodiment of the present invention. In a m-th UL slot from the start that is instructed to be transmitted or in which transmission occasions are configured, the terminal 20 may assume that S indicated by a SLIV is the position of the start symbol of the first PUSCH, and that L is the number of PUSCH symbols within the slot. The value of m may be transmitted by higher layer signaling, and the value of m may be greater than or equal to 1.

Fig. 7 is an example of a case in which m = 2 and (S, L) = (2, 4). As in Fig. 5, here, three PUSCHs are allocated in the slot #1. In the slot #2, by assuming S = 0, the start symbol position becomes 0. As for L, the value 4 that is the same value as that of the first slot is assumed. In the slot #2, similar to Fig. 6, the maximum value of n satisfying S + L * n < 14 is the number of PUSCHs within the slot, and the number of symbols X in the last PUSCH within the slot is set so that S + L * (n - 1) + X = 14. Namely, as shown in Fig. 6, in the slot #2, n = 3 and X = 6. Accordingly, the number of PUSCHs is 3, the number of symbols in each of the first PUSCH and the second PUSCH is 4, and the number of symbols in the third PUSCH is 6.

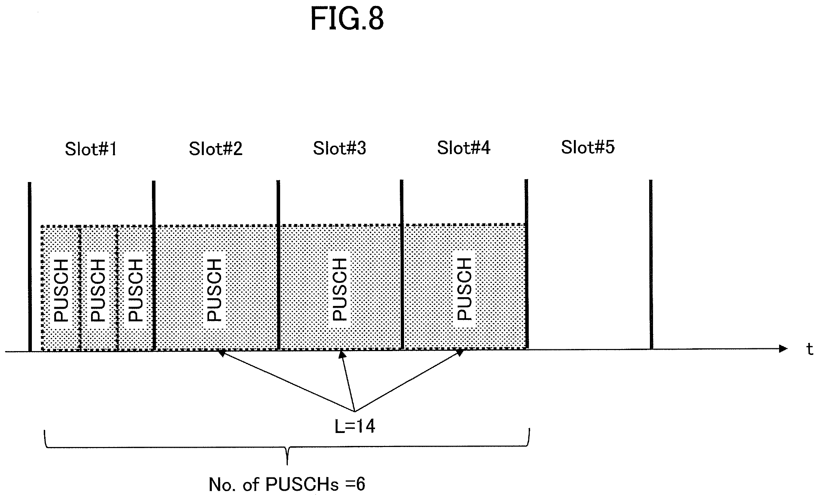

Fig. 8 is a diagram illustrating an example (4) of an arrangement of PUSCHs in an embodiment of the present invention. In a UL slot other than the first UL slot that is instructed to be transmitted or in which transmission occasions are configured, the terminal 20 may assume a fixed number of symbols.

For example, as illustrated in Fig. 8, in a UL slot other than the first UL slot, it is assumed that L in the PUSCH mapping type B is 14 symbols. As illustrated in Fig. 8, in each of the slot #2, the slot #3, and the slot #4, 14 symbols are allocated in the PUSCH.

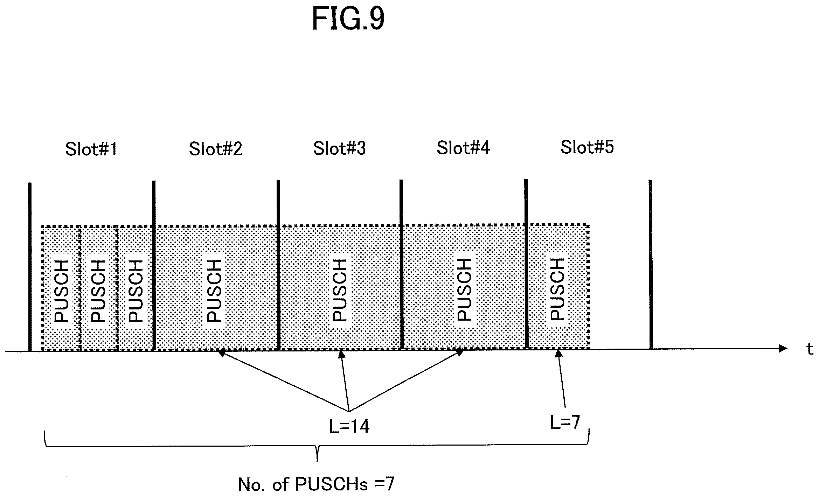

Fig. 9 is a diagram illustrating an example (5) of an arrangement of PUSCHs in an embodiment of the present invention. In a UL slot other than the first UL slot that is instructed to be transmitted or in which transmission occasions are configured, the terminal 20 may assume that the number of symbols in the last PUSCH is the number of symbols indicated by the base station 10.

For example, as illustrated in Fig. 9, for each of the slot #2, the slot #3, and the slot #4, L in the PUSCH mapping type B may be assumed to be 14 symbols, as in Fig. 8. Furthermore, for the slot #5, S = 0 may be assumed, and L may be assumed to be a value additionally transmitted to the terminal 20 by higher layer signaling or DCI. The L may take a value from among all the patterns from 1 to 14, or, for example, two bits may be assigned to L so that the two bits represent L = {2, 4, 7, 14}. Note that the number of patterns that can be indicated may be different depending on whether the L is notified by higher layer signaling or the L is notified by DCI.

According to the above-described embodiments, the terminal 20 can identify symbols to which multiple PUSCHs arranged within a slot are allocated, and the terminal 20 can transmit data through the multiple PUSCHs. Furthermore, the terminal 20 can identify multiple PUSCHs allocated within a slot and subsequent one or more PUSCHs as a consecutive plurality of PUSCHs, and the terminal 20 can transmit data.

Namely, in a radio communication system, multiple uplink shared channels can be assigned.

### (Device Configurations)

Next, examples of functional configurations of the base station 10 and the terminal 20 for executing the above-described processing and operation are described. The base station 10 and the terminal 20 include functions for executing the above-described embodiments. However, each of the base station 10 and the terminal 20 may only provide with a part of the functions in the embodiments.

### <Base station 10>

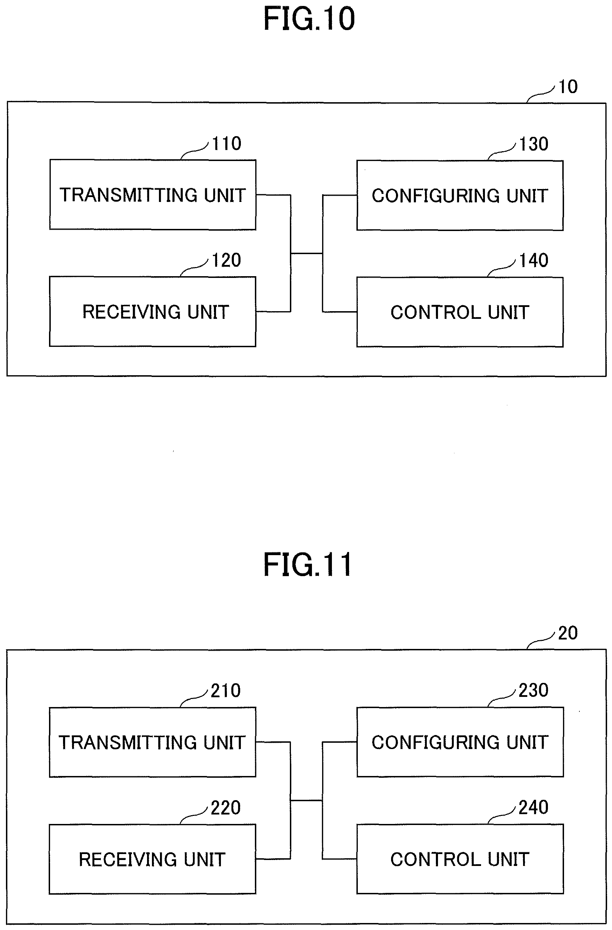

Fig. 10 is a diagram illustrating an example of a functional configuration of the base station 10 in an embodiment of the present invention. As illustrated in Fig. 10, the base station 10 includes a transmitting unit 110; a receiving unit 120; a configuring unit 130; and a control unit 140. The functional configuration illustrated in Fig. 10 is merely an example. Functional division and names of functional units may be any division and names, provided that operation according to the embodiments of the present invention can be executed.

The transmitting unit 110 includes a function for generating a signal to be transmitted to the terminal 20 and transmitting the signal through radio. The transmitting unit 110 transmits an inter network node message to another network node. The receiving unit 120 includes a function for receiving various signals transmitted from the terminal 20 and retrieving, for example, information of a higher layer from the received signals. The transmitting unit 110 has a function to transmit NR-PSS, NR-SSS, NR-PBCH, DL/UL control signals, and the like, to the terminal 20. The receiving unit 120 receives an inter network node message from another network node.

The configuring unit 130 stores preconfigured configuration information and various types of configuration information to be transmitted to the terminal 20. Content of the configuration information is, for example, a configuration on an NR-U communication and the like.

As described in the embodiments, the control unit 140 performs control on a UL grant. A functional unit related to signal transmission in the control unit 140 may be included in the transmitting unit 110, and a functional unit related to signal reception in the control unit 140 may be included in the receiving unit 120.

### <Terminal 20>

Fig. 11 is a diagram illustrating an example of a functional configuration of a terminal 20 according to an embodiment of the present invention. As illustrated in Fig. 11, the terminal 20 includes a transmitting unit 210; a receiving unit 220; a configuring unit 230; and a control unit 240. The functional configuration illustrated in Fig. 11 is only one example. The functional division and the names of the names of the functional units may be any division and names, provided that operations of the embodiments of the present invention can be executed.

The transmitting unit 210 creates a transmission signal from transmission data and transmits the transmission signal through radio. The receiving unit 220 receives various signals through radio and retrieves higher layer signals from the received physical layer signals. The receiving unit 220 has a function to receive NR-PSS, NR-SSS, NR-PBCH, DL/UL/SL control signals, etc., transmitted from the base station 10. For example, the transmitting unit 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20 as D2D communication, and the receiving unit 220 receives PSCCH, PSSCH, PSDCH, PSBCH, and the like from another terminal 20.

The configuring unit 230 stores various types of configuration information received from the base station 10 by the receiving unit 220. The configuring unit 230 also stores preconfigured configuration information. The content of the configuration information is, for example, a configuration on an NR-U communication, and the like.

As described in the embodiments, the control unit 240 performs control for executing transmission based on a UL grant. A functional unit related to signal transmission in the control unit 240 may be included in the transmitting unit 210, and a functional unit related to signal reception in the control unit 240 may be included in the receiving unit 220.

### (Hardware configuration)

The block diagrams (Fig. 10 and Fig. 11) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

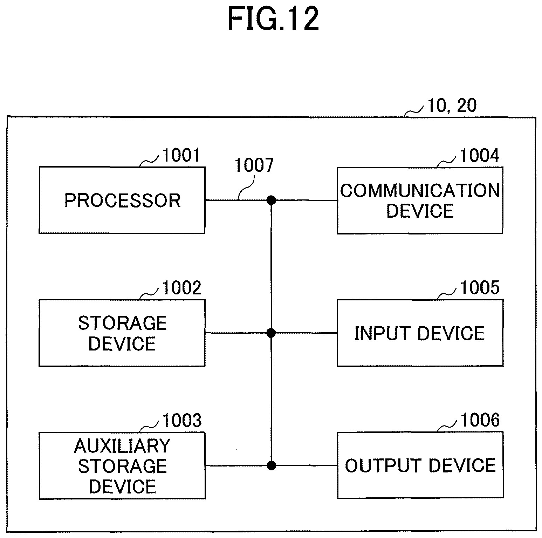

For example, the base station 10, the terminal 20, or the like in an embodiment of the present invention may function as a computer for performing a process of the radio communication method according to the present disclosure. Fig. 12 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described control unit 140, the control unit 240, and the like may be implemented by the processor 1001.

Furthermore, the processor 1001 reads a program (program code), a software module, data, or the like from at least one of the auxiliary storage device 1003 and the communication device 1004 out to the storage device 1002, and executes various types of processes according to them. A program causing a computer to execute at least some of the operations described in the above embodiments is used as the program. For example, the control unit 140 of the base station 10 illustrated in Fig. 10 may be implemented by a control program which is stored in the storage device 1002 and operates on the processor 1001. Furthermore, for example, the control unit 240 of the terminal 20 illustrated in Fig. 11 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described storage medium may be, for example, a database, a server, or any other appropriate medium including at least one of the storage device 1002 and the auxiliary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other. The bus 1007 may be configured with a single bus or may be configured with different buses between the devices.

Furthermore, each of the base station 10 and the terminal 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a terminal including a receiving unit that receives higher layer signaling and downlink control information; a control unit that identifies a plurality of uplink shared channels allocated in a first slot at a start, from among scheduled consecutive uplink shared channels, based on the higher layer signaling and the downlink control information; and a transmitting unit that transmits data through the identified plurality of uplink shared channels.

According to the above-described configuration, the terminal 20 can identify symbols to which multiple PUSCHs arranged in a slot are allocated, and the terminal 20 can transmit data through the PUSCHs. Furthermore, the terminal 20 can identify a plurality of PUSCHs allocated in a slot and subsequent one or more PUSCHs as a plurality of contiguous PUSCHs, and the terminal 20 can transmit data. Namely, in a radio communication system, multiple uplink shared channels can be assigned.

The control unit may identify one or more symbols included in the first slot in which the plurality of uplink shared channels is allocated, based on a position of a start symbol and a length of an uplink shared channel indicated by the higher layer signaling or in the downlink control information. According to the above-described configuration, the terminal 20 can identify symbols to which a plurality of PUSCHs arranged in a slot is allocated, and the terminal 20 can transmit data through the PUSCHs.

The control unit may set a length of a last uplink shared channel in the first slot so that the uplink shared channel ends at a last symbol included in the first slot. According to the above-described configuration, the terminal 20 can identify symbols to which a plurality of PUSCHs arranged in a slot is allocated, and the terminal 20 can transmit data through the PUSCHs.

The control unit may identify one or more symbols included in a second slot in which a plurality of uplink shared channels is allocated, based on that a position of a start symbol is a first symbol of the slot and based on a length of an uplink shared channel, and the control unit may set a length of a last uplink shared channel in the second slot so that the last uplink shared channel ends at a last symbol included in the second slot. According to this configuration, the terminal 20 can identify symbols to which a plurality of PUSCHs arranged in a slot subsequent to the start is allocated, and the terminal 20 can transmit data through the PUSCHs.

The control unit may identify that, in a slot other than the first slot at the start and a last slot from among slots in which the scheduled consecutive uplink shared channels are allocated, an uplink shared channel is allocated to have a fixed number of symbols, and the control unit may identify that an uplink shared channel included in the last slot is allocated to have a number of symbols indicated by the higher layer signaling or in the downlink control information. According to this configuration, the terminal 20 can identify symbols to which one or more PUSCHs arranged in the last slot are allocated, and the terminal 20 can transmit data through the PUSCHs.

Furthermore, according to the embodiments of the present invention, there is provided a communication method in which a terminal executes a receiving procedure of receiving higher layer signaling and downlink control information; a control procedure of identifying a plurality of uplink shared channels allocated in a first slot at a start from among scheduled consecutive uplink shared channels, based on the higher layer signaling and the downlink control information; and a transmitting procedure of transmitting data through the identified plurality of uplink shared channels.

According to the above-described configuration, the terminal 20 can identify symbols to which multiple PUSCHs arranged in a slot are allocated, and the terminal 20 can transmit data through the PUSCHs. Furthermore, the terminal 20 can identify a plurality of PUSCHs allocated in a slot and subsequent one or more PUSCHs as a plurality of contiguous PUSCHs, and the terminal 20 can transmit data. Namely, in a radio communication system, multiple uplink shared channels can be assigned.

### (Supplemental embodiment)

The embodiments of the present invention are described above, but the disclosed invention is not limited to the above embodiments, and those skilled in the art would understand various modified examples, revised examples, alternative examples, substitution examples, and the like. In order to facilitate understanding of the invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW) .

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the terminal is replaced with communication between a plurality of terminals 20 (for example, which may be referred to as device-to-device (D2D) or vehicle-to-everything (V2X)). In this case, the terminal 20 may have the functions of the base station 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB), a sub carrier group (SCG), a resource element group (REG), a PRB pair, an RB pair, or the like.

Furthermore, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in this specification may be used alone, in combination, or may be switched in accordance with the execution. Furthermore, notification of predetermined information (for example, notification of "being X") is not limited to notification performed explicitly, but may be performed implicitly (for example, not notifying the predetermined information).

Note that, in the present disclosure, DCI is an example of downlink control information. PUSCH is an example of an uplink shared channel.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

10 base station
110 transmitting unit
120 receiving unit
130 configuring unit
140 control unit
20 terminal
210 transmitting unit
220 receiving unit
230 configuring unit
240 control unit
30 core network
1001 processor
1002 storage device
1003 auxiliary storage device
1004 communication device
1005 input device
1006 output device

## Claims

1. A terminal comprising:
a receiving unit that receives higher layer signaling and downlink control information;
a control unit that identifies a plurality of uplink shared channels allocated in a first slot at a start, from among scheduled consecutive uplink shared channels, based on the higher layer signaling and the downlink control information; and
a transmitting unit that transmits data through the identified plurality of uplink shared channels.

2. The terminal according to claim 1, wherein the control unit identifies one or more symbols included in the first slot in which the plurality of uplink shared channels is allocated, based on a position of a start symbol and a length of an uplink shared channel transmitted by the higher layer signaling or in the downlink control information.

3. The terminal according to claim 2, wherein the control unit sets a length of a last uplink shared channel in the first slot so that the uplink shared channel ends at a last symbol included in the first slot.

4. The terminal according to claim 3, wherein the control unit identifies one or more symbols included in a second slot in which a plurality of uplink shared channels is allocated, based on that a position of a start symbol is a first symbol of the slot and based on a length of an uplink shared channel, and the control unit sets a length of a last uplink shared channel in the second slot so that the last uplink shared channel ends at a last symbol included in the second slot.

5. The terminal according to claim 3, wherein the control unit identifies that, in a slot other than the first slot at the start and a last slot from among slots in which the scheduled consecutive uplink shared channels are allocated, an uplink shared channel is allocated to have a fixed number of symbols, and the control unit identifies that an uplink shared channel included in the last slot is allocated to have a number of symbols indicated by the higher layer signaling or in the downlink control information.

6. A communication method in which a terminal executes
a receiving procedure of receiving higher layer signaling and downlink control information;
a control procedure of identifying a plurality of uplink shared channels allocated in a first slot at a start from among scheduled consecutive uplink shared channels, based on the higher layer signaling and the downlink control information; and
a transmitting procedure of transmitting data through the identified plurality of uplink shared channels.
